# EUROPEAN PATENT APPLICATION

(11) **EP 4 682 838 A1**
(43) Date of publication of application: **21.01.2026**
(21) Application number: 24189830.3
(22) Date of filing: 19.07.2024
(51) Int. Cl.: G06V 10/44, G06T 7/12

(54) **A METHOD FOR DETECTING A NARROW OBJECT**

(71) Applicant: Robert Bosch GmbH, 70442 Stuttgart (DE)
(72) Inventor: Remenyi, Istvan, 2890 Tata (HU); Muliter, Márk, 5244 Tiszaszölös (HU); Petö, Márk, 1027 Budapest (HU)

(57) **Abstract**

The invention relates to a method (100) for detecting a narrow object (1), comprising the following steps:
- Providing (101) at least one image, the image comprising a representation of the narrow object (1), the image being a result of an acquisition by at least one sensor (2),
- Determining (102) gradient based line segments in the provided image,
- Merging (103) the gradient based line segments based on an angular and a spatial proximity,
- Filtering (104) the merged line segments to detect the narrow object (1).

Furthermore, the invention relates to a computer program, an apparatus, and a storage medium for this purpose.

## Description

The invention relates to a method for detecting a narrow object. Furthermore, the invention relates to a computer program, an apparatus, and a storage medium for this purpose.

### State of the art

In the logistical unpacking process for an Automated Unpacking Machine, a first step is to select and depalletize cardboard boxes from the palettes. This may for example be done by coupling computer vision-based object detection with robotic arm movement control. The box detection may be performed with classical computer vision techniques like edge detection or with deep learning.

Long, narrow objects, like straps on cardboard boxes are especially hard to detect for neural network-based object detection algorithms, because the high background-foreground ratio of the pixels inside the bounding box label represents the narrow objects noisy on the pixel and image feature level. Some cardboard boxes are strapped, some are not, and it is not a standardized property of such a cardboard box during unpacking.

Moreover, in the case of an Automated Unpacking Machine, straps from the box must be removed for further automatic unpacking of the cardboard box, therefore the rough or not-so-precise localization of the strap on the cardboard boxes could lead to unstable strap cut point proposal(s) for a cutting station machine or robotic arm with precise cutting.

Gradient-based line segment detectors as known in the state of the art have the following three weaknesses. For single pixel lines, they detect the gradient level change twice, for both sides of the gradient change. Perceptually single line segments are often broken down into smaller segments in practice, so very often the output is not a single straight line. Further, they can't handle intersections of multiple lines.

### Disclosure of the invention

According to aspects of the invention a method with the features of claim 1, a computer program with the features of claim 8, a data processing apparatus with the features of claim 9 as well as a computer-readable storage medium with the features of claim 10 are provided. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention, a method for detecting a narrow object is provided, the method comprising the following steps, wherein the steps may be performed repeatedly and/or in a specific order:
- Providing at least one image, the image comprising a representation of the narrow object, the image being a result of an acquisition by at least one sensor,
- Determining gradient based line segments in the provided image,
- Merging the gradient based line segments based on an angular and a spatial proximity,
- Filtering the merged line segments to detect the narrow object.

The sensor may be a camera sensor. The gradient based line segments in the provided image may be determined based on changes in brightness or colour intensity along the line. This may be achieved through a calculation of an image gradient, which particularly measures a rate of change of the brightness or colour intensity in different directions. The method for detecting a narrow object according to the invention may provide a precise means of identifying narrow objects like a strap on a cardboard box in an image. The angular proximity may indicate a matching angle of line segments within a defined range. The spatial proximity may indicate a proximity of line segments within a defined range. By determining gradient-based line segments, merging them based on angular and spatial proximity, and filtering out non-relevant line segments, the method according to the invention may accurately detect the narrow object, thereby enabling efficient processing and automation, particularly in the context of Automated Unpacking Machines.

In an example, the narrow object is a strap on a cardboard box. It is thus possible that the narrow object detection pipeline according to the invention may be utilized to identify straps on cardboard boxes. An output of the inventive method may then be at least one strap detection or a list of strap detections, which may then be used to create cut region proposals for an Automated Unpacking Machine.

It is possible that the method further comprises the following step:
- Performing an object detection in the at least one image to detect closed cardboard boxes.

By performing an object detection in the at least one image, the method may accurately identify closed cardboard boxes, thereby enhancing the overall accuracy of the strap detection pipeline. This step may utilise a pre-trained model such as YOLOv5 or similar algorithms to detect objects with distinct shapes and sizes, such as closed cardboard boxes. The output of this detection step may then be used to refine the strap detection process, enabling more precise identification and validation of strap segments.

It is further possible that the method further comprises the following step:
- Providing at least one cutting region on the detected strap based on a cutting characteristic of a cutting machine.

The additional step of providing at least one cutting region on the detected strap, based on a cutting characteristic of a cutting machine, may enhance a practicality and provide a technical application of the detection method according to the invention. This step may enable the creation of specific cutting proposals for a cutting machine, taking into account the capabilities and characteristics of the cutting machine. The characteristic may indicate a region, for example a geometric centre of the strap, where the cutting machine is designed to cut the strap.

It is also possible that during the Merging, a respective longer and a respective shorter gradient based line segment are considered distinct from each other. This distinction between longer and shorter gradient-based line segments may allow for more accurate merging of line segments, enabling better detection of features of the narrow object in the provided image. This may help to reduce false positives or missed detections, ultimately improving the overall accuracy of the detection process of the narrow object within the method according to the invention.

It is possible that the Merging comprises the following step:
- Defining an angular and a spatial threshold by configuring a first and a second global parameter,
   the first global parameter defining a length for the longer gradient based line segment,
   and the second global parameter defining a mergeability by penalizing normalized values between respective gradient based line segments.

The Merging step in the method for detecting a narrow object may thus be configured to include defining an angular and a spatial threshold. This thresholding process may involve setting the two global parameters, namely the first parameter that defines a length for the longer gradient-based line segment and the second parameter that defines mergeability by penalizing normalized values between respective gradient-based line segments. This additional configuration may allow for more precise merging of line segments, which in turn may improve the accuracy of detecting the narrow object. The first global parameter may in the context of the present invention also be referred to as ξ_s and may for example be 0.8. The second global parameter may in the context of the present invention also be referred to as τ_θ and may for example be π/80.

It is further possible that the Filtering comprises the following steps:
- Filtering out respective line pairs with intersection points within the gradient based line segments, particularly by means of the Bentley-Ottoman algorithm,
- Searching for respective line pairs within the remaining gradient based line segments with a defined angular difference to determine their level of difference from being parallel.

The filtering step may thus involve a two-stage process. Initially, respective line pairs with intersection points within the gradient-based line segments may be filtered out using an algorithm like the Bentley-Ottoman algorithm to remove any overlapping or intersecting lines. This may help to reduce noise and may improve an accuracy of the subsequent stage. Subsequently, it may be searched for remaining line pairs with a defined angular difference to determine their level of difference from being parallel, thereby identifying potential strap segments that may be validated as part of the narrow object.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, computer program, a storage medium and apparatus according to embodiments of the invention,
- Fig. 2:: Straps on a cardboard box, a sensor and a cutting machine according to embodiments of the invention,
- Fig. 3:: A method according to embodiments of the invention.

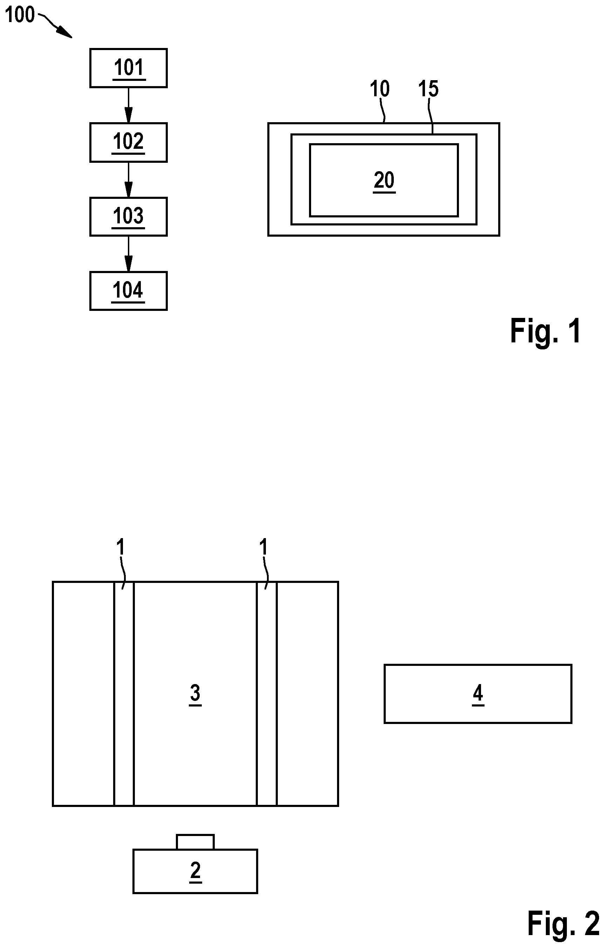

Fig. 1 shows a method 100, computer program 20, a storage medium 15 and apparatus 10 according to embodiments of the invention.

Fig. 1 particularly shows an embodiment of a method 100 for detecting a narrow object 1. In a first step 101, at least one image is provided, the image comprising a representation of the narrow object 1, the image being a result of an acquisition by at least one sensor 2. In a second step 102, gradient based line segments are determined in the provided image. In a third step 103, the gradient based line segments are merged based on an angular and a spatial proximity. In a fourth step 104, the merged line segments are filtered to detect the narrow object 1.

Fig. 2 shows narrow objects 1 as straps 1 on a cardboard box 3, a sensor 2, which preferably is a camera sensor, and a cutting machine 4 according to embodiments of the invention. Based on the method according to embodiments of the invention, cutting regions on the straps 1 may be determined or proposed. Within these cutting regions, the cutting machine 4 may cut the straps 1.

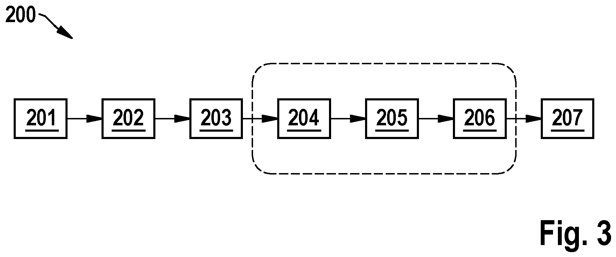

Fig. 3 shows an alternative method 200 according to the invention. Here, in a first step 201, an image may be provided. In a second step 202, an object detector, such as Yolov5, may be applied to detect closed cardboard boxes. In a third step 203, a region of interest that is a result of the previous step, may be cropped. In a next step 204, line segments may be determined, preferably by using Line Segment Detector (LSD). In a fifth step 205, the line segments may be merged, preferably by using Line Segment Merging (LSM). In a sixth step 206, the merged line segments may be filtered, for example by means of an algorithm like the Bentley-Ottoman algorithm and a search for line pairs with appropriate angular difference to check their level of difference from being parallel, if they do not intersect. In a seventh step 207, detected straps may be put out as a list.

Yolov5 is an object detector neural network model, which may be trained to detect cardboard boxes and box straps with limitations of the bounding box label representation (https://github.com/ultralytics/yolov5).

Line Segment Detector (LSD) is an algorithm, which may create line segments based on line support regions, which are determined by locally straight contours on images - so called gradient level lines. Semantically, a straight line may build up from multiple line segments on an image because of various sharp line angle changes of narrow objects, considering their edges' detection, which may ideally be contrastive gradient level lines (https://www.ipol.im/pub/art/2012/gjmr-lsd/).

Line Segment Merging (LSM) is an algorithm specifically targeting LSD line segment outputs to merge lines from calculating line segment angle and spatial proximities to a unified line (https://www.researchgate.net/publication/311851 059_LSM_Perceptually_accura te_line_segment_merging).

The weaknesses of the state of the art may occur for cardboard box strap line detection as well. Therefore, the invention according to embodiments addresses the same three issues for cut point proposals. Further, embodiments of the invention pertain to a changeable alternative for the LSD+LSM pipeline steps with an unsupervised semantic segmentation with DeepCut for strap detection.

DeepCut (https://arxiv.org/abs/1711.08506) is an unsupervised segmentation method, which may serve as an alternative embodiment for the invention for unsupervised strap segmentation, which may take into account original image localities - pair-wise scalar affinities as raw features - of objects.

The invention according to embodiments combines cardboard box and cardboard box strap detection into a linear pipeline, where its output may be used to coordinate a controllable cutting robotic arm or cutting machine via interfacing cut region proposals to the machine from the computer vision pipeline. These cutting region proposals may then be translated for the global coordinate system of the whole camera-machine system to precisely determine the cutting point on straps for the cutting machine. Embodiments of the invention focus on how to design such a computer vision pipeline to satisfy the system criteria described from these requirements and in an Automated Unpacking Machine.

By utilising additional computer vision algorithms, especially tailored for narrow object detection - like stable line detection -, for the strap detection problem, straps and a point to cut them may be localized to reveal the contents of the cardboard box in the next phase of the Automated Unpacking Machine. An alternative solution may be to segment closed box region of interest patches (or even whole images) end-to-end, with DeepCut or a similar architecture in an unsupervised fashion.

Strap detection may be a multi-step process or an end-to-end single step process. According to embodiments of the invention, a multi-step process is described. Such an embodiment is described in detail below. An end-to-end process may also be feasible for unsupervised segmentation, when the known object class is the strap, and a best pixel cluster partition is searched for, which belong to that class.

In a first step according to an embodiment, an object detection is performed to detect closed cardboard boxes. Here, Yolov5 may be used. Within this step, closed cardboard box detections may be detected, which may be labeled beforehand. Since multiple object classes may be present on an image, only the closed box instances may be filtered out. Straps on these regions-of-interest (ROI) straps may be detected as foreground images.

In a next step according to this embodiment, a two-step process may be performed: First, gradient based line segments may be acquired. Then, based on these highly granularized gradient based line segments with respect to perceptual properties, the line segments may be merged based on adaptive angular and spatial proximity. Line Segmentation Detector (LSD) may be used for this.

In a next step according to this embodiment, said merging of the line segments may be performed. This step may be performed by using the highly granularized line segments from the previous step. During line segment merging, a longer and a shorter line segment may be considered distinct from each other. The perception of mergeability may be inversely proportional to a relative spatial distance, an angular difference and may be proportional to the longer line's length. Both spatial and angular thresholds may be tuned adaptively by configuring two global parameters: ξ_s = 0.8 and τ_θ= π/80. ξ_s may control the longer line segment length linearly. It may be a value between 0 and 1; the higher the value, the more relaxed the parameter is to get more abstract lines to allow relatively close parallel lines to be merged. τ_θ is a parameter that may control mergeability by penalizing normalized values between line segments; the lesser the value, the harder is to merge line segments. There may be four scenarios of merging based on the endpoint projection overlaps of a larger and shorter line segment: no overlap on projection, one-point overlaps - with short or long overlapping projection length on segments -, and both endpoints overlap on projection. The resulting set of line segments may be perceptually closer to what a human sees as a line, and the line segments may be much less granularized.

In a next step, a line filtering may be performed. Even with carefully selected parameters and a reduced number of line segments from the previous step, the line segments may need to be validated to constitute strap segments. For validation, multiple processes may be used. One example is the Bentley-Ottoman algorithm to filter out line pairs with intersection points and the second example may be to search for line pairs with appropriate angular difference to check their level of difference from being parallel, if they do not intersect. With this filtering step, box ROI's with no straps on them may be filtered out, if they haven't been filtered out beforehand in the pipeline.

In a next step, a list of strap detections may be put out. An output of the algorithm may thus be a list of line pairs with endpoints, defining a cardboard boxes' strap segment. Cut region proposals may then be created from the detected strap segments, which may be an approximal center or middle line of the strap segment, or where it is suitable for the cutting machine.

The above explanation of the embodiments describes the present invention in the context of examples. Of course, individual features of the embodiments can be freely combined with each other, provided that this is technically reasonable, without leaving the scope of the present invention.

## Claims

1. A method (100) for detecting a narrow object (1), comprising the following steps:
- Providing (101) at least one image, the image comprising a representation of the narrow object (1), the image being a result of an acquisition by at least one sensor (2),
- Determining (102) gradient based line segments in the provided image,
- Merging (103) the gradient based line segments based on an angular and a spatial proximity,
- Filtering (104) the merged line segments to detect the narrow object (1).

2. The method (100) of claim 1, **characterized in that** the narrow object (1) is a strap on a cardboard box (3).

3. The method (100) of claim 2, **characterized in that** the method (100) further comprises the following step:
- Performing an object detection in the at least one image to detect closed cardboard boxes (3).

4. The method (100) of claim 2 or 3, **characterized in that** the method (100) further comprises the following step:
- Providing at least one cutting region on the detected strap based on a cutting characteristic of a cutting machine (4).

5. The method (100) of any one of the preceding claims, **characterized in that** during the Merging (103), a respective longer and a respective shorter gradient based line segment are considered distinct from each other.

6. The method (100) of claim 5, **characterized in that** the Merging (103) comprises the following step:
- Defining an angular and a spatial threshold by configuring a first and a second global parameter,
the first global parameter defining a length for the longer gradient based line segment,
and the second global parameter defining a mergeability by penalizing normalized values between respective gradient based line segments.

7. The method (100) of any one of the preceding claims, **characterized in that** the Filtering (104) comprises the following steps:
- Filtering out respective line pairs with intersection points within the gradient based line segments, particularly by means of the Bentley-Ottoman algorithm,
- Searching for respective line pairs within the remaining gradient based line segments with a defined angular difference to determine their level of difference from being parallel.

8. A computer program (20), comprising instructions which, when the computer program (20) is executed by a computer (10), cause the computer (10) to carry out the method (100) of any one of the preceding claims.

9. A data processing apparatus (10), comprising means for carrying out the method (100) of any one of claims 1 to 7.

10. A computer-readable storage medium (15) comprising instructions which, when executed by a computer (10), cause the computer (10) to carry out the steps of the method (100) of any one of claims 1 to 7.

## Amended claims

### Amended claims in accordance with Rule 137(2) EPC.

1. A method (100) for detecting a strap on a cardboard box (3), comprising the following steps:
- Providing (101) at least one image, the image comprising a representation of the strap on the cardboard box (3), the image being a result of an acquisition by at least one sensor (2),
- Determining (102) gradient based line segments in the provided image,
- Merging (103) the gradient based line segments based on an angular and a spatial proximity,
- Filtering (104) the merged line segments to detect the strap on the cardboard box (3),
wherein the method (100) further comprises the following step:
- Providing at least one cutting region on the detected strap based on a cutting characteristic of a cutting machine (4), the characteristic indicating a region, particularly a geometric centre of the strap, where the cutting machine is designed to cut the strap.

2. The method (100) of claim 1, **characterized in that** the method (100) further comprises the following step:
- Performing an object detection in the at least one image to detect closed cardboard boxes (3) utilising a pre-trained model, particularly YOLOv5.

3. The method (100) of any one of the preceding claims, **characterized in that** during the Merging (103), a respective longer and a respective shorter gradient based line segment are considered distinct from each other.

4. The method (100) of claim 3, **characterized in that** the Merging (103) comprises the following step:
- Defining an angular and a spatial threshold by configuring a first and a second global parameter,
the first global parameter defining a length for the longer gradient based line segment,
and the second global parameter defining a mergeability by penalizing normalized values between respective gradient based line segments.

5. The method (100) of any one of the preceding claims, **characterized in that** the Filtering (104) comprises the following steps:
- Filtering out respective line pairs with intersection points within the gradient based line segments, particularly by means of the Bentley-Ottoman algorithm,
- Searching for respective line pairs within the remaining gradient based line segments with a defined angular difference to determine their level of difference from being parallel, thereby identifying potential strap segments that are validated as part of the strap on the cardboard box (3).

6. A computer program (20), comprising instructions which, when the computer program (20) is executed by a computer (10), cause the computer (10) to carry out the method (100) of any one of the preceding claims.

7. A data processing apparatus (10), comprising means for carrying out the method (100) of any one of claims 1 to 5.

8. A computer-readable storage medium (15) comprising instructions which, when executed by a computer (10), cause the computer (10) to carry out the steps of the method (100) of any one of claims 1 to 5.
